# EUROPÄISCHE PATENTSCHRIFT

(11) **EP 0 482 363 B1**
(45) Veröffentlichungstag und Bekanntmachung des Hinweises auf die Patenterteilung: **25.01.1995**
(21) Anmeldenummer: 91116104.0
(22) Anmeldetag: 21.09.1991
(51) Int. Cl.: A47B 96/14, F16B 12/20, F16B 5/06

(54) **Trägerschiene**
Support rail
Rail de support

(30) Priorität: 24.10.1990 DE 4033703
(43) Veröffentlichungstag der Anmeldung: 29.04.1992
(73) Patentinhaber: CEKA-BÜROMÖBEL WERKE C. KRAUSE UND SOHN GmbH & Co. KG, D-36304 Alsfeld (DE)
(72) Erfinder: Hildebrandt, Norbert, c/o KEIL & SCHAAFHAUSEN, D-60322 Frankfurt am Main (DE)
(74) Vertreter: Keil, Rainer A., Dipl.-Phys. Dr.

(56) Entgegenhaltungen:
- DE-A- 1 654 593
- FR-A- 2 263 410
- US-A- 3 760 547

## Beschreibung

Die Erfindung betrifft eine Trägerschiene für Möbel nach dem Oberbegriff des Anspruchs 1.

Aus der FR-A-2 263 410 bekannte Trägerschienen dieser Art bestehen aus einem einzigen im wesentlichen U-förmigen Trägerprofil, dessen Verankerungsschenkel einen äußeren Abstand haben, welcher im wesentlichen der lichten Breite der für sie bestimmten Nut des Möbelteils entspricht, d.h. vor und nach dem Einsetzen das Trägerprofil allenfalls geringfügig geringer ist als die Nutbreite, während die Verankerungs-Vorsprünge seitlich über diese Breite hinausragen und sich in dem die Nut begrenzenden Material der Nutseitenwände verankern sollen. Beim Einsetzen des Trägerprofils in die Nut wird dadurch zwangsläufig das Möbelteil im Grenzbereich zur Nut beschädigt. Außerdem ist ein derart eingesetztes Trägerprofil nur in begrenzter Weise belastbar.

Aufgabe der vorliegenden Erfindung ist es, eine Trägerschiene der eingangs genannten Art so auszubilden, daß sie auf einfache Weise und ohne Beschädigung der an die Nut angrenzenden Bereiche des Möbelteils in letztere einsetzbar und in dieser bei Erzielung hoher Tragfähigkeit verankerbar ist.

Diese Aufgabe wird erfindungsemäß im wesentlichen bei einer Trägerschiene der eingangs genannten Art mit den Merkmalen des Anspruchs 1 gelöst.

Bei der erfindungsgemäßen Tragschiene kann dabei im Ausgangszustand der Außenabstand der Verankerungsvorsprünge - anders als beim Stand der Technik - geringer sein als die lichte Breite der Nut, in welcher das Trägerprofil verankert werden soll. Zur Festlegung der Trägerschiene kann zunächst das Halteprofil, welches noch schmaler als das Trägerprofil ist, problemlos in die Nut eingelegt werden. Dann wird das U-profilförmige Trägerprofil auf das Halteprofil gesteckt und so weit in die Nut eingedrückt, bis es mit der Außenseite des Möbelteils fluchtet bzw. an dem Möbelteil oder dem Halteprofil anschlägt. Während des Aufsteckens des Trägerprofils auf das Halteprofil bis in seine gewünschte Endstellung werden die Verankerungsschenkel des Trägerprofils seitlich so aufgespreizt, daß, allerdings jetzt im Abstand von der Außenseite des Möbelteils, die Verankerungsvorsprünge in dem die Nut seitlich begrenzenden Material des Möbelteils verankert werden. Hierdurch wird ein besonders fester Sitz dadurch erzielt,
daß die Verankerungsschenkel auch bei Beanspruchung nicht mehr nach innen elastisch ausweichen können, weil sie sich nach innen auf dem Halteprofil abstützen. Hierdurch wird also ein außerordentlich fester und dauerhafter Sitz bei beschädigungsfreiem Einsetzen gewährleisten.

Die Verankerungsschenkel können in Ausgestaltung dieses Erfindungsgedankens auf ihren einander zugewandten Seiten Rastmittel, z.B. Rastvertiefungen, für ein Zusammenwirken mit Gegenrastmitteln, z.B. Rastvorsprüngen, an den nach außen weisenden Seiten des Trägerprofils in einer Vorraststellung zwischen Trägerprofil und Halteprofil aufweisen. Hierdurch lassen sich Trägerprofil und Halteprofil zu einer vormontierten Einheit zusammenfügen, die dann als Ganzes, mit dem Halteprofil zum Nutgrund weisend in die Nut einsetzbar ist, wonach erst das Trägerprofil in seine Endstellung auf das Halteprofil vollständig aufgedrückt wird. In der Vorraststellung zwischen Trägerprofil und Halteprofil sind die Verankerungsschenkel des Trägerprofils vorzugsweise überhaupt noch nicht gegenüber der selbständigen Ausgangslage des Trägerprofils seitlich aufgespreizt oder nur so wenig, daß auch für diesen Fall der vormontierten Einheit aus Trägerprofil und Halteprofil diese Einheit zunächst beschädigungsfrei in die Nut eingelegt werden kann, bevor ein weiteres Aufdrücken des Trägerprofils auf das Halteprofil unter Aufspreizung der Verankerungsschenkel und damit die Verankerung in der Nut stattfindet. Hierdurch wird die Montage wesentlich vereinfacht, da das Halteprofil nicht mehr selbständig zentriert in die Nut eingelegt zu werden braucht, bevor die Festlegung des Trägerprofils in der Nut erfolgt.

In weiterer Ausgestaltung der Erfindung wird ferner gelehrt, daß die Verankerungsschenkel über eine Schwächungszone mit einem, ggf. Befestigungslöcher im Rasterabstand aufweisenden Verbindungsabschnitt des Trägerprofils verbunden sind. Auf diese Weise wird das Aufdrücken des Trägerprofils bis in seine in der Nut verrasteten Endstellung erleichtert, weil für das Aufspreizen der Verankerungsschenkel nur ein geringerer Kraftaufwand erforderlich ist.

Ein weiteres Merkmal der Erfindung besteht darin, daß die Verankerungsschenkel auf ihren einander zugewandten Seiten oder das Halteprofil auf seinen voneinander abgewandten Seiten Vertiefungen für die Aufnahme der als Rastvorsprünge ausgebildeten Rastmittel der auf voneinander abgewandten Seiten des Halteprofils oder an den Verankerungsschenkeln des Trägerprofils in der Endstellung des Trägerprofils relativ zu dem Halteprofil aufweisen. Hierdurch wird erreicht, daß die der Vorverrastung dienenden Rastvorsprünge, welche relativ nahe am äußeren Ende der Seitenflächen des Halteprofils vorgesehen sein müssen, um eine Vorraststellung zu sichern, das Überführen des Trägerprofils in dessen Endstellung auf dem Halteelement nicht behindern.

Ein Aufstecken des Trägerprofils auf das Halteprofil wird dann weiter erleichtert, wenn die einander zugewandten Seiten der Verankerungsschenkel des Trägerprofils zumindest in ihrem an die Öffnung des Trägerprofils angrenzenden Bereich sich zur Öffnung hin konisch aufweitend zueinander geneigt verlaufen. Auf diese Weise werden nämlich die Verankerungsschenkel erst in der letzten Phase des Aufdrückens des Trägerprofils auf das Halteprofil aufgespreizt, so daß sich die Verankerungsvorsprünge relativ dicht am Nutgrund seitlich in dem die Nut begrenzenden Material des Möbelteils eindrücken und verankern.

Diesem Ziel kann auch die Maßnahme dienen, daß die nach außen weisenden Seiten des Halteprofils zumindest in mit den Verankerungsschenkeln des Trägerprofils zusammenwirkenden Bereichen sich zur Aufsteckseite hin konisch verjüngend zueinander geneigt verlaufen.

Das Überstülpen des Trägerprofils über das Halteprofil wird dadurch vereinfacht, wenn die Verankerungsschenkel an ihren Enden innenseitige Einführungsschrägen aufweisen.

Zur Förderung dieses Ziels kann auch das Halteprofil auf dem auf der Aufsteckseite liegenden außenseitigen Ende Einführungsschrägen aufweisen.

Der Aufspreizvorgang kann beim Aufstecken des Trägerprofils auf das Halteprofil dadurch beeinflußt werden, daß die nach außen weisenden Seiten des Halteprofils von der Aufsteckseite aus gesehen in einem mittleren Bereich unter geringerer Schräge verlaufen als in einem nutgrundseitigen Endbereich. Auf diese Weise werden beim Aufdrücken des Trägerprofils auf das Halteprofil die Verankerungsschenkel zunächst nur allmählich und erst in der Endphase stark aufgespreizt.

Auch können die Halteschenkel über einen Schwächungsbereich mit einem nutbodenseitigen Basisabschnitt verbunden sein. Hierdurch können die Halteschenkel beim Aufstecken des Trägerprofils zum Ausgleich von Maßtoleranzen, falls dies erwünscht ist, geringfügig elastisch nach innen ausweichen.

Wenn die einander zugewandten Seiten der Halteschenkel des Halteelements mit einer Zahnung für die Aufnahme eines Gewindebolzens ausgestattet sind, können z.B. im Abstand der in dem Trägerprofil vorgesehenen Befestigungslöchern Gewindebolzen, bspw. Schrankböden oder Schrankbodenträger in die Trägerschiene eingeschraubt werden. Da hierdurch die Halteschenkel des Halteprofils zusätzlich nach außen verspannt werden, erhält die Trägerschiene mit dem Einschrauben derartiger Gewindebolzen einen noch festeren Sitz in der Nut.

Die Halteschenkel können ferner an ihrem aufsteckseitigen Ende innenseitige Einführungsschrägen aufweisen, wodurch das Einsetzen von Gewindebolzen erleichtert wird.

Einführungsschrägen können darüber hinaus auch an den nutgrundseitigen Enden der Verankerungsschenkel außenseitig vorgesehen sein, so daß das anfängliche Einführen des Trägerprofils in die Nut oder der Einheit aus Trägerprofil und Halteprofil erleichtert wird.

Nachteilig ist, daß die Ränder der Nuten für das Einsetzen von Trägerschienen insbesondere bei weichem Material der Möbelteile, wie z.B. bei Preßspanplatten, ungleichmäßig aussehen. Diese Ränder können bei einer erfindungsgemäßen Trägerschiene dadurch einfach abgedeckt werden, daß der Verbindungsabschnitt des Trägerprofils über die Verbindungsstellen der Verankerungsschenkel und damit auch über die Nut seitlich hinausragende Abdeckflansche aufweist, welche auch als Anschlag des Trägerprofils beim Aufstecken desselben auf das Halteprofil dienen können, so daß das Trägerprofil überall gleichmäßig tief in die Nut eingefügt und darin verankert ist.

Weitere Ziele, Merkmale, Vorteile und Anwendungsmöglichkeiten der vorliegenden Erfindung ergeben sich aus der nachfolgenden Beschreibung von Ausführungsbeispielen anhand der Zeichnung. Dabei bilden alle beschriebenen und/oder bildlich dargestellten Merkmale für sich oder in beliebiger sinnvoller Kombination den Gegenstand der Erfindung, auch unabhängig von ihrer Zusammenfassung in den Ansprüchen oder deren Rückbeziehung.

Es zeigen:
- Fig. 1: im Querschnitt eine die Erfindung aufweisende Trägerschiene in vorverrasteter Stellung einer Einheit aus Trägerprofil und Halteprofil, welche bereits in eine Nut eines Möbelteils eingefügt worden ist, und
- Fig. 2: im Schnitt eine erfindungsgemäße Trägerschiene gemäß einem anderen Ausführungsbeispiel, wobei das Trägerprofil bereits vollständig auf das Halteprofil aufgedrückt und somit die Trägerschiene in der Nut des Möbelstücks verankert worden ist.

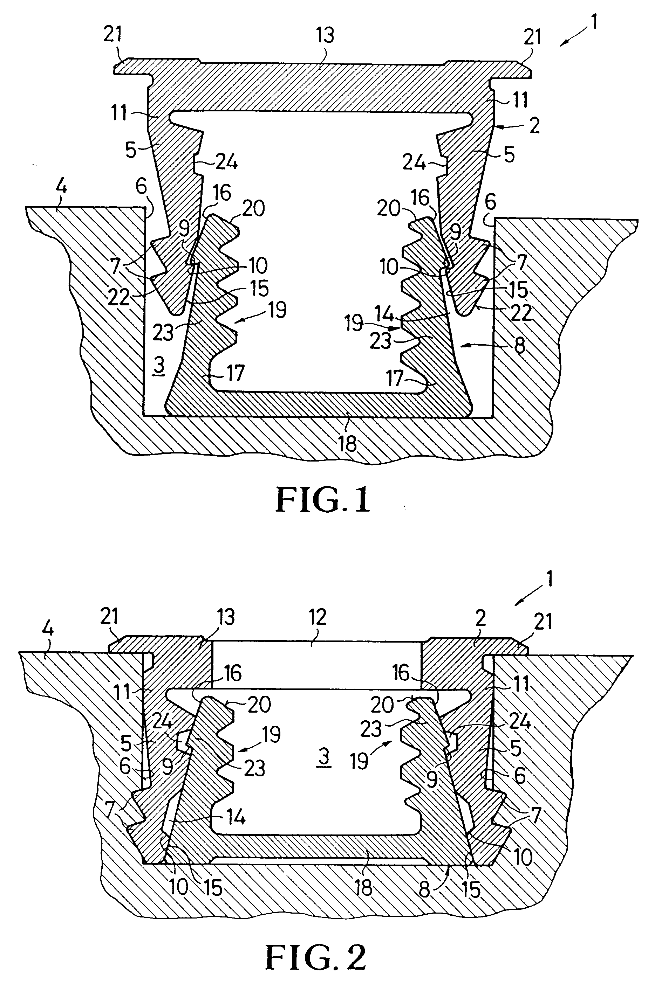

Die für Möbel, insbesondere Büromöbel bestimmte Trägerschiene 1 weist ein im wesentlichen U-förmiges Trägerprofil 2 auf, welches in einer Nut 3 eines Möbel teils 4 verankert werden soll. Zu diesem Zweck sind an Verankerungsschenkeln 5 des Trägerprofils 2 den Nutseitenflächen 6 zugewandte Verankerungsvorsprünge 7 vorgesehen. Das Trägerprofil 2 ist mit seinen Verankerungsschenkeln 5 auf ein in der Nut 3 befindliches schmales Halteprofil 8, dieses übergreifend, aufsteckbar. Die lichte Weite der Verankerungsschenkel 5 und der Abstand der Außenseiten des Halteprofils 8 sind dabei so bemessen und gestaltet, daß beim Aufstecken des Trägerprofils 2 auf das Halteprofil 8 die Verankerungsschenkel 5 derart aus der aus Fig. 1 ersichtlichen Ausgangsstellung in die aus Fig. 2 ersichtliche Verankerungsstellung aufspreizbar sind. Wie aus Fig. 1 ersichtlich, ist der maximale Abstand der Außenseiten der Verankerungsschenkel 5 einschließlich deren Verankerungsvorsprünge 7 in der Ausgangsstellung geringer ist als die lichte Weite der Nut 3, in welcher die Trägerschiene 1 verankert werden soll. Erst in der aufgespreizten Verankerungsstellung greifen die Verankerungsschenkel 5 mit ihren Verankerungsvorsprüngen 7 in das die Nut 3 seitlich begrenzende Material des Möbelteils 4 zur Verankerung ein.

Aus Fig. 1 ist auch ersichtlich, daß die Verankerungsschenkel 5 auf ihren einander zugewandten Seiten Rastmittel 9, im dargestellten Falle Rastvertiefungen, für ein Zusammenwirken mit Gegenrastmitteln 10, im dargestellten Falle Rastvorsprüngen, an nach außen weisenden Seiten des Halteprofils 8 in einer Vorraststellung zwischen Trägerprofil 2 und Halteprofil 8 aufweisen. Trägerprofil 1 und Halteprofil 8 bilden in dieser Form eine vormontierte Einheit, welche als solche in die Nut 3, wie aus Fig. 1 ersichtlich, eingelegt werden kann. Erst aus dieser Stellung heraus erfolgt das vollständige Aufdrücken des Trägerprofils 1 auf das Halteprofil 8 in die verrastete Endstellung, wie sie aus Fig. 2 ersichtlich ist.

Die Verankerungsschenkel 5 sind je über eine Schwächungszone 11 mit einem Verbindungsabschnitt 13 des Trägerprofils 2 verbunden, wobei in dem Verbindungsabschnitt 13, in Fig. 1 nicht dargestellt, in Fig. 2 dargestellt, im Rasterabstand Befestigungslöcher 12 vorgesehen sein können. Aufgrund der Schwächungszonen 11 können die Verankerungsschenkel 5 beim Aufdrücken auf das Halteprofil 8 leicht nach außen aufgespreizt werden, während sie vorher einen hinreichenden Spannsitz des Trägerprofils 2 auf dem Halteprofil 8 gewährleisten.

Wie aus den Fig. 1 und 2 gleichermaßen ersichtlich, weisen die Verankerungsschenkel 5 auf ihren einander zugewandten Seiten in der Nähe des Verbindungsabschnitts 13 Vertiefungen 24 auf, welche der Aufnahme der als Rastvorsprünge ausgebildeten Rastmitteln 9 in der Endstellung des Trägerprofils 2 auf dem Halteprofil 8 dienen. Hierdurch wird verhindert, daß sich die Verankerungsschenkel 5 in der Nähe des Verbindungsabschnitts 13 zu stark aufspreizen.

Wie ebenfalls aus den Fig. 1 und 2 ersichtlich, sind die einander zugewandten Seiten der Verankerungsschenkel 5 des Trägerprofils 2 zumindest in ihrem an die Öffnung 14 des Trägerprofils 2 angrenzenden Bereich sich zur Öffnung 14 hin konisch aufweitend zueinander geneigt. Ebenso sind die nach außen weisenden Seiten des Halteprofils 8 zumindest in mit den Verankerungsschenkeln 5 des Trägerprofils 2 zusammenwirkenden Bereichen sich zur Aufsteckseite hin konisch verjüngend zueinander geneigt. Hierdurch ist ein Aufstülpen des Trägerprofils 2 auf das Halteprofil 8 ohne zu frühes Aufspreizen der Verankerungsschenkel 5 möglich. Dies soll nämlich in der Weise erfolgen, daß die äußeren Verankerungsvorsprünge 7 erst möglichst dicht am Nutgrund in den die Nut 3 seitlich begrenzenden Materialbereichen des Möbelteils 4 eingreifen. Zu diesem Zweck ist bspw. auch vorgesehen, daß die nach außen weisenden Seiten des Halteprofils 8 von der Aufsteckseite aus gesehen in einem mittleren Bereich unter geringerer Schräge verlaufen als in einem nutgrundseitigen Endbereich.

Die Verankerungsschenkel 5 weisen an ihren freien Enden innenseitige Einführungsschrägen 15 zur Erleichterung des Ansteckens an das Halteprofil 8 auf. Zum gleichen Zweck hat das Halteprofil 8 an dem auf der Aufsteckseite liegenden außenseitigen Ende Einführungsschrägen 16.

Bei beiden in den Fig. 1 und 2 dargestellten Ausführungsbeispielen ist das Halteprofil 8, wie das Trägerprofil 2, als U-Profil ausgebildet, und zwar mit aufsteckseitigen Halteschenkeln 23. Auch die Halteschenkel 23 können über einen Schwächungsbereich 17 mit einem nutbodenseitigen Basisabschnitt 18 verbunden sein, um beim Aufstecken des Trägerprofils 2 um ein gewisses Maß elastisch auszuweichen, jedoch noch das erforderliche Widerlager für die Verankerungsschenkel 5 in der Verankerungsstellung bieten zu können.

In beiden in Fig. 1 und 2 dargestellten Ausführungsbeispielen tragen die Halteschenkel 23 auf ihren einander zugewandten Seiten eine Zahnung 19, in welche ein nicht dargestellter Gewindebolzen eingeschraubt werden kann. Auf diese Weise wird die Trägerschiene 1 mit dem Einschrauben von Gewindebolzen noch zuverlässiger in der Nut 3 festgelegt, da sich die Verankerung der Verankerungsvorsprünge 7 aus den Seitenwänden der Nut 3 nicht mehr lösen können. Ein Ausweichen der Verankerungsschenkel 5 nach innen ist auf diese Weise nämlich verhindert. Um die Einführung von Gewindebolzen zu erleichtern, weisen die Halteschenkel 23 an ihrem aufsteckseitigen Ende innenseitig Einführungsschrägen 20 auf. Auch die Verankerungsschenkel 5 können außenseitig an ihren freien Enden Einführungsschrägen 22 aufweisen, um das Einführen der Trägerschiene 1 alleine oder der Einheit aus Trägerschiene 1 und Halteschiene 8 in die Nut 3 zu erleichtern.

Bei den in den Fig. 1 und 2 veranschaulichten beiden Ausführungsformen weisen die Verbindungsabschnitte 13 des Trägerprofils 2 ferner über die Verbindungsstellen der Verankerungsschenkel 5 seitlich hinausragende Abdeckflansche 21 auf, welche damit unregelmäßige oder beschädigte Nutränder überdecken. Am jeweiligen inneren Übergang vom Abdeckflansch 21 zum Verankerungsschenkel 5 ist ferner eine Auskehlung 25 zur Aufnahme von überschüssigem Nutkantenmaterial vorgesehen, so daß das Trägerprofil 2 jeweils einen gleichmäßig tiefen Sitz an der Oberfläche des Möbelteils 4 findet.

### Bezugszeichenliste:

- 1: Trägerschiene
- 2: Trägerprofil
- 3: Nut
- 4: Möbelteil
- 5: Verankerungsschenkel
- 6: Nutseitenflächen
- 7: Verankerungsvorsprünge
- 8: Halteprofile
- 9: Rastmittel
- 11: Schwächungszone
- 12: Befestigungslöcher
- 13: Verbindungsabschnitt
- 14: Öffnung
- 15: Einführungsschrägen
- 16: Einführungsschrägen
- 17: Schwächungsbereich
- 18: Basisabschnitt
- 19: Zahnung
- 20: Einführungsschrägen
- 21: Abdeckflansche
- 22: Einführungsschrägen
- 23: Halteschenkel
- 24: Vertiefungen
- 25: Auskehlung

## Patentansprüche

1. Trägerschiene (1) für Möbel, insbesondere gelochte Bodenträgerschiene für Büromöbel, mit einem im wesentlichen U-förmigen Trägerprofil (2), welches in eine Nut (3) eines Möbelteils (4) einsetzbar und mit Hilfe von an den zwei Flanschen des U-förmigen Trägerprofils (2), welche Verankerungsschenkel (5) bilden, vorgesehenen, den Nutseitenflächen (6) zugewandten Verankerungsvorsprüngen (7) in der Nut (3) verankerbar ist, gekennzeichnet durch ein in die Nut (3) einsetzbares schmaleres Halteprofil (8), auf welches das Trägerprofil (2), das Halteprofil (8) übergreifend, unter Aufspreizung der Verankerungschenkel (5) aufsteckbar ist.

2. Trägerschiene nach Anspruch 1, dadurch gekennzeichnet, daß die Verankerungsschenkel (5) auf ihren einander zugewandten Seiten Rastmittel (9) für ein Zusammenwirken mit Gegenrastmitteln (10) an nach außen weisenden Seiten des Halteprofils (8) in einer Vorraststellung zwischen Trägerprofil (3) und Halteprofil (8) aufweisen.

3. Trägerschiene nach Anspruch 1 oder 2, dadurch gekennzeichnet, daß die Verankerungsschenkel (5) über eine Schwächungszone (11) mit einem, ggf. Befestigungslöcher (12) im Rasterabstand aufweisenden Steg des U-förmigen Trägerprofils (2), welcher einen Verbindungsabschnitt (13) bildet, verbunden sind.

4. Trägerschiene nach einem der Ansprüche 1 bis 3, dadurch gekennzeichnet, daß die Verankerungsschenkel (5) auf ihren einander zugewandten Seiten oder das Halteprofil (8) auf seinen voneinander abgewandten Seiten Vertiefungen (22) für die Aufnahme der als Rastvorsprünge ausgebildeten Rastmittel (9) der aufeinander abgewandten Seiten des Halteprofils (8) oder an den Verankerungsschenkeln (5) des Trägerprofils (2) in der relativen Endstellung von Trägerprofil (2) und Halteprofil (8) aufweisen.

5. Trägerschiene nach einem der Ansprüche 1 bis 4, dadurch gekennzeichnet, daß die einander zugewandten Seiten der Verankerungsschenkel (5) des Trägerprofils (2) zumindest in ihrem an die Öffnung (14) des Trägerprofils (2) angrenzenden Bereich sich zur Öffnung (14) hin konisch aufweitend zueinander geneigt verlaufen.

6. Trägerschiene nach einem der Ansprüche 1 bis 5, dadurch gekennzeichnet, daß die nach außen weisenden Seiten des Halteprofils (8) zumindest in mit den Verankerungsschenkeln (5) des Trägerprofils (2) zusammenwirkenden Bereichen sich zur Aufsteckseite hin konisch verjüngend zueinander geneigt verlaufen.

7. Trägerschiene nach einem der Ansprüche 1 bis 6, dadurch gekennzeichnet, daß die Verankerungsschenkel (5) an ihren Enden innenseitige Einführungsschrägen (15) aufweisen.

8. Trägerschiene nach einem der Ansprüche 1 bis 7, dadurch gekennzeichnet, daß das Halteprofil (8) an den auf der Aufsteckseite liegenden Ende außenseitige Einführungsschrägen (16) aufweist.

9. Trägerschiene nach einem der Ansprüche 1 bis 8, dadurch gekennzeichnet, daß die nach außen weisenden Seiten des Halteprofils (8) von der Aufsteckseite aus gesehen zunächst in einem mittleren Bereich unter geringerer Schräge verlaufen als in einem nutgrundseitigen Endbereich.

10. Trägerschiene nach einem der Ansprüche 1 bis 9, dadurch gekennzeichnet, daß das Halteprofil (8) als U-Profil ausgebildet ist mit aufsteckseitigen Halteschenkeln (16).

11. Trägerschiene nach Anspruch 10, dadurch gekennzeichnet, daß die Halteschenkel (16) über einen Schwächungsbereich (17) mit einem nutbodenseitigen Basisabschnitt (18) verbunden sind.

12. Trägerschiene nach Anspruch 10 oder 11, dadurch gekennzeichnet, daß die einander zugewandten Seiten der Halteschenkel (16) des Halteelements (8) mit einer Zahnung (19) für die Aufnahme eines Gewindebolzens ausgestattet sind.

13. Trägerschiene nach einem der Ansprüche 10 bis 12, dadurch gekennzeichnet, daß die Halteschenkel (16) an ihrem aufsteckseitigen Ende innenseitige Einführungsschrägen (20) aufweisen.

14. Trägerschiene nach einem der Ansprüche 1 bis 13, dadurch gekennzeichnet, daß der Verbindungsabschnitt (13) des Trägerprofils (2) über die Verbindungsstellen der Verankerungsschenkel (5) seitlich hinausragende Abdeckflansche (21) aufweist.

## Claims

1. A mounting rail (1) for furniture, more particularly a perforated floor mounting rail for office furniture, having a substantially U-shaped mounting profile section (2) which can be inserted into a groove (3) in a part (4) of the furniture and locked in the groove (3) with the aid of locking projections (7) facing out towards the groove sidefaces (6) from the two flanges of the U-shaped mounting profile section (2) comprising the locking limbs (5), characterized by having a narrower holding profile section (8) which can be inserted into the groove (3) and on to which the mounting profile section (2) can be clipped, bridging the holding profile section (8) and prising the locking limbs (5) apart.

2. A mounting rail as in Claim 1, characterized in that the inwardly facing walls of the locking limbs (5) have stops (9) adapted to engage with counterstops (10) on the outwardly facing walls of the holding profile section (8) and provide a half-lock setting between the mounting profile section (2) and the locking profile section (8).

3. A mounting rail as in Claim 1 or 2, characterized in that the locking limbs (5) are attached by weakening zones (11) to the web of the U-shaped mounting profile section (2), which forms an attachment section (13) and optionally contains regularly spaced fixing holes (12).

4. A mounting rail as in any of Claims 1 to 3, characterized in that the locking limbs (5) have on their mutually facing walls, or that the holding profile section (8) has on its outwardly facing walls, recesses (22) to accommodate the projection-type stops (9) on the inwardly facing walls of the holding profile section (8) or on the locking limbs (5) of the mounting profile section (2), when the mounting profile section (2) and the locking profile section (8) are in their final relative setting.

5. A mounting rail as in any of Claims 1 to 4, characterized in that the mutually facing walls of the locking limbs (5) of the mounting profile section (2) diverge conically towards the mouth (14) of the mounting profile section (2), at least in the vicinity of the mouth (14).

6. A mounting rail as in any of Claims 1 to 5, characterized in that the outwardly facing walls of the holding profile section (8) converge conically towards the insertion plane, at least the areas engaging with the locking limbs (5) of the mounting profile section (2).

7. A mounting rail as in any of Claims 1 to 6, characterized in that the edges of the locking limbs (5) have internal lead-in bevels (15).

8. A mounting rail as in any of Claims 1 to 7, characterized in that the insertion plane edges of the holding profile section (8) have external lead-in bevels (16).

9. A mounting rail as in any of Claims 1 to 8, characterized in that, seen from the insertion side, the outwardly facing walls of the holding profile section (8) initially run through an intermediate region disposed at a smaller oblique angle than in a groove root area.

10. A mounting rail as in any of Claims 1 to 9, characterized in that the holding profile section (8) is adapted as a U-shaped profile section having holding limbs (16) on the insertion side.

11. A mounting rail as in Claim 10, characterized in that the holding limbs (16) are attached by weakening zones (17) to a base section (18) in the groove root area.

12. A mounting rail as in Claim 10 or 11, characterized in that the inwardly facing walls of the holding limbs (16) carry teeth (19) to accept threaded bolts.

13. A mounting rail as in any of Claims 10 to 12, characterized in that the insertion plane edges of the holding limbs (16) have internal lead-in bevels (20).

14. A mounting rail as in any of Claims 1 to 13, characterized in that the attachment section (13) of the mounting profile section (2) has cover flanges (21) protruding laterally beyond the attachment zones of the locking limbs (5).

## Revendications

1. Rail-support (1) destiné à des meubles, en particulier rail-support de base, perforé, pour mobilier de bureau, comportant un profilé de support (2) sensiblement en forme de U qui se monte dans une rainure (3) d'un élément (4) de mobilier et qui, par des saillies d'ancrage (7) tournées vers les flancs (6) de la rainure, prévues sur les deux ailes du profilé de support (2) en forme de U qui constituent des ailes d'ancrage, peut être ancré dans la rainure (3), caractérisé par un profilé de blocage (8) plus étroit qui se place dans la rainure (3) et sur lequel on emboîte le profilé de support (2) qui coiffe le profilé de blocage (8) en provoquant l'écartement des ailes d'ancrage (5).

2. Rail-support (1) selon la revendication 1, caractérisé par le fait que les ailes d'ancrage (5), sur leurs faces en vis-à-vis, portent des moyens d'encliquetage (9) qui sont destinés à coopérer avec des moyens d'encliquetage (10) conjugués prévus sur des faces tournées vers l'extérieur du profilé de blocage (8) dans une position dans laquelle le profilé de support (3) est pré-encliqueté sur le profilé de blocage (8).

3. Rail-support selon la revendication 1 ou la revendication 2, caractérisé par le fait que les ailes d'ancrage (5) sont reliées par une zone (11) affaiblie à une partie du profilé de support (2) en forme de U qui, le cas échéant, est pourvue de trous de fixation (12) disposés à intervalle régulier et qui constitue la partie de liaison (13).

4. Rail-support selon l'une des revendications 1 à 3, caractérisé par le fait que les ailes d'ancrage (5), sur leurs faces en vis-à-vis, ou le profilé de blocage (8), sur ses faces éloignées l'une de l'autre, portent des formes en creux (22) destinées à recevoir les moyens d'encliquetage (9) agencés sous forme de saillies d'encliquetage de faces mutuellement éloignées du profilé de blocage (8) ou des ailes d'ancrage (5) du profilé de support (2) lorsque le profilé de support (2) et le profilé de blocage (8) occupent leur position relative extrême.

5. Rail-support selon l'une des revendications 1 à 4, caractérisé par le fait que les faces en vis-à-vis des ailes d'ancrage (5) du profilé de support (2), au moins dans leur partie voisine de l'ouverture (14) du profilé de support (2), sont inclinées l'une par rapport à l'autre et s'élargissent en forme de cône en direction de l'ouverture (14).

6. Rail-support selon l'une des revendications 1 à 5, caractérisé par le fait que les faces tournées vers l'extérieur du profilé de blocage (8), au moins dans les zones qui coopèrent avec les ailes d'ancrage (5) du profilé de support (2), sont inclinées l'une par rapport à l'autre et se rétrécissent en forme de cône en direction du côté d'emboîtement.

7. Rail-support selon l'une des revendications 1 à 6, caractérisé par le fait que les ailes d'ancrage (5) sont pourvues à leur extrémité de rampes d'introduction (15) intérieures.

8. Rail-support selon l'une des revendications 1 à 7, caractérisé par le fait que le profilé de blocage (8) est pourvu à ses extrémités côté emboîtement de rampes d'introduction (16) extérieures.

9. Rail-support selon l'une des revendications 1 à 8, caractérisé par le fait que les faces tournées vers l'extérieur du profilé de blocage (8), vu côté emboîtement, présentent une zone médiane avec une pente plus faible que dans une zone d'extrémité située côté fond de la rainure.

10. Rail-support selon l'une des revendications 1 à 9, caractérisé par le fait que le profité de blocage (8) est agencé sous forme de profilé en U avec des ailes de blocage (16) disposées côté emboîtement.

11. Rail-support selon la revendication 10, caractérisé par le fait que les ailes de blocage (16) sont reliées à une partie de base (18) côté fond de la rainure par l'intermédiaire d'une partie affaiblie (17).

12. Rail-support selon la revendication 10 ou la revendication 11, caractérisé par le fait que les faces en vis-à-vis des ailes de blocage (16) du profilé de blocage (8) sont pourvues de dents (19) destinées à recevoir une tige filetée.

13. Rail-support selon l'une des revendications 10 à 12, caractérisé par le fait que les ailes de blocage (16) sont pourvues à leur extrémité côté emboîtement de rampes d'introduction (20) intérieures.

14. Rail-support selon l'une des revendications 1 à 13, caractérisé par le fait que la partie de liaison (13) du profilé de support (2) comporte des rebords (21) de couverture qui font saillie latéralement au-delà des emplacements de raccordement des ailes d'ancrage (5).
